# EUROPÄISCHE PATENTANMELDUNG

(11) **EP 4 279 323 A2**
(43) Veröffentlichungstag der Anmeldung: **22.11.2023**
(21) Anmeldenummer: 23173422.9
(22) Anmeldetag: 15.05.2023
(51) Int. Cl.: B60L 50/60, B60L 53/16, B60L 53/18, H02J 7/00

(54) **VERSORGUNGSSTATION FÜR ELEKTRISCH BETREIBBARE FAHRZEUGE UND BETRIEBSVERFAHREN FÜR EINE VERSORGUNGSSTATION**

(30) Priorität: 17.05.2022 DE 102022112328
(71) Anmelder: Compleo Charging Solutions AG, 44309 Dortmund (DE)
(72) Erfinder: Checrallah, Kachouh, 44227 Dortmund (DE)
(74) Vertreter: Wickord, Wiro

(57) **Zusammenfassung**

Die Erfindung betrifft eine AC-Versorgungsstation für ein elektrisch betreibbares Fahrzeug umfassend eine Anschlussverbindung (1) mit einem Neutralleiter (N) und drei Phasenleitern (L1, L2, L3), wobei die Anschlussverbindung (1) ein mit dem elektrisch betreibbaren Fahrzeug verbindbares Anschlusselement (2) und einen Versorgungsanschluss (3) verbindet, umfassend ein der Anschlussverbindung (1) zugeordnetes, ansteuerbares erstes Schaltmittel (4) sowie wenigstens ein der Anschlussverbindung (1) zugeordnetes, ansteuerbares weiteres Schaltmittel (5, 5.1, 5.2, 5.3) zum Ein- und Ausschalten einer Ladespannung an dem Anschlusselement (2) und umfassend ein Steuergerät (11) zum Durchführen eines Ladevorgangs, wobei das erste Schaltmittel (4) dem Neutralleiter (N) und das wenigstens eine weitere Schaltmittel (5, 5.1, 5.2, 5.3) wenigstens einem der drei Phasenleiter (L1, L2, L3) zugeordnet ist und dem ersten Schaltmittel (4) und dem wenigstens einen weiteren Schaltmittel (5, 5.1, 5.2, 5.3) eine Verriegelungsschaltung (6) mit einem Signalausgang zugeordnet ist, wobei von der Verriegelungsschaltung (6) ausgangsseitig ein Schaltbefehl (9) für das erste Schaltmittel (4) sowie ein Schaltbefehl (10, 10.1, 10.2, 10.3) für das wenigstens eine weitere Schaltmittel (5, 5.1, 5.2, 5.3) bereitgestellt sind derart, dass der wenigstens eine der drei Phasenleiter (L1, L2, L3) mittels des wenigstens einen weiteren Schaltmittels (5, 5.1, 5.2, 5.3) nur verbindbar ist, wenn der Neutralleiter (N) mittels des ersten Schaltmittels (4) verbunden ist, und/oder dass der Neutralleiter (N) mittels des ersten Schaltmittels (4) nur trennbar ist, wenn der wenigstens eine der drei Phasenleiter (L1, L2, L3) mittels des wenigstens einen weiteren Schaltmittels (5, 5.1, 5.2, 5.3) getrennt ist. Ferner betrifft die Erfindung ein Betriebsverfahren für eine AC-Versorgungsstation.

## Beschreibung

Die Erfindung betrifft eine AC-Versorgungsstation für ein elektrisch betreibbares Fahrzeug umfassend eine Anschlussverbindung mit einem Neutralleiter und drei Phasenleitern, wobei die Anschlussverbindung ein mit dem elektrisch betreibbaren Fahrzeug verbindbares Anschlusselement und einen Versorgungsanschluss verbindet, umfassend ein der Anschlussverbindung zugeordnetes, ansteuerbares erstes Schaltmittel sowie wenigstens ein der Anschlussverbindung zugeordnetes, ansteuerbares weiteres Schaltmittel zum Ein- und Ausschalten einer Ladespannung an dem Anschlusselement und umfassend ein Steuergerät zum Durchführen eines Ladevorgangs. Ferner betrifft die Erfindung ein Betriebsverfahren für eine AC-Versorgungsstation.

Bekannt und am Markt weit verbreitet sind AC-Versorgungsstationen mit einer Anschlussverbindung und einem der Anschlussverbindung zugeordneten mehrpoligen Schaltmittel. Das mehrpolige Schaltmittel ist den drei Phasenleitern der Anschlussverbindung zugeordnet und dient dazu, die Phasenleiter der Anschlussverbindung gleichzeitig zu trennen oder zu verbinden. Sofern die Phasenleiter getrennt sind, ist das Anschlusselement der AC-Versorgungsstation spannungsfrei geschaltet. In einem Verbindungsbetriebszustand des Schaltmittels hingegen ist die Ladespannung eingeschaltet. Beispielsweise ist eine derartige Konfiguration in der EP 2 500 208 A2 beschrieben.

Die DE 10 2019 134 384 A1 offenbart, den drei Phasenleitern der Anschlussverbindung das mehrpolige Schaltmittel zum gleichzeitigen Schalten der drei Phasenleiter und darüber hinaus einzelne Schaltmittel zum individuellen Trennen oder Verbinden jedes einzelnen Phasenleiters zuzuordnen. Durch das Vorsehen dieser zusätzlichen einpoligen Schaltmittel kann ein Ladevorgang für das an die AC-Versorgungsstation angeschlossene elektrisch betreibbare Fahrzeug wahlweise einphasig oder dreiphasig durchgeführt werden. Möglich wird dies, indem insgesamt vier Schaltmittel zum Ein- und Ausschalten der Ladespannung vorgesehen werden, wobei jedem Phasenleiter zwei Schaltmittel zugeordnet sind. Die Komplexität der Schaltmittelanordnung ist damit vergleichsweise groß und es muss ein erhöhter Aufwand zur Abstimmung beziehungsweise Synchronisierung der Betriebszustände der verschiedenen Schaltmittel betrieben werden.

Aufgabe der vorliegenden Erfindung ist es, eine verbesserte AC-Versorgungsstation und ein Betriebsverfahren für eine verbesserte AC-Versorgungsstation anzugeben.

Zur Lösung der Aufgabe ist die Erfindung in Verbindung mit dem Oberbegriff des Patentanspruchs 1 dadurch gekennzeichnet, dass das erste Schaltmittel dem Neutralleiter und das wenigstens eine weitere Schaltmittel wenigstens einem der drei Phasenleiter zugeordnet ist und dass dem ersten Schaltmittel und dem wenigstens einen weiteren Schaltmittel eine Verriegelungsschaltung mit einem Signalausgang zugeordnet ist, wobei von der Verriegelungsschaltung an dem Signalausgang ein Schaltbefehl für das erste Schaltmittel sowie ein Schaltbefehl für das wenigstens eine weitere Schaltmittel bereitgestellt sind derart, dass der wenigstens eine der drei Phasenleiter mittels des wenigstens einen weiteren Schaltmittels nur verbindbar ist, wenn der Neutralleiter mittels des ersten Schaltmittels verbunden ist, und/oder dass der Neutralleiter mittels des ersten Schaltmittels nur trennbar ist, wenn der wenigstens eine der drei Phasenleiter mittels des wenigstens einen weiteren Schaltmittels getrennt ist.

Der besondere Vorteil der Erfindung besteht darin, dass ein an die AC-Versorgungsstation angeschlossenes, elektrisch betreibbares Fahrzeug wahlweise einphasig oder mehrphasig und zugleich sicher geladen werden kann. Während beim mehrphasigen Laden eine hohe Ladeleistung bereitgestellt wird und ein Energiespeicher des Fahrzeugs entsprechend schnell geladen werden kann, ist die Ladeleistung beim einphasigen Laden gedrosselt. Die Drosselung der Ladeleistung bietet sich beispielsweise an, wenn für das Laden regenerative Energie, beispielsweise Sonnenenergie oder Windenergie genutzt wird und diese Energie temporär nur begrenzt verfügbar ist. Wird die Energie demgegenüber aus einem öffentlichen Versorgungsnetz entnommen beziehungsweise ist die Witterung günstig und die Verfügbarkeit der regenerativ gewonnenen Energie sichergestellt, bedarf es der Drosselung mithin nicht und das Fahrzeug kann mehrphasig mit entsprechend hoher Leistung geladen werden. Zugleich ist der Betrieb der AC-Versorgungsstation sicher, weil die Verriegelungsschaltung gewährleistet, dass das wenigstens eine weitere Schaltmittel nur dann in den Verbindungsbetriebszustand verbringbar ist, wenn das erste Schaltmittel im Verbindungsbetriebszustand vorgesehen ist und der Neutralleiter verbunden ist. Ebenso sorgt die Verriegelungsschaltung dafür, dass das erste Schaltmittel, welches dem Neutralleiter zugeordnet ist, nur dann in einen Trennbetriebszustand verbringbar ist, wenn das wenigstens eine weitere Schaltmittel bereits in seinem Trennbetriebszustand vorgesehen ist und der dem weiteren Schaltmittel zugeordnete Phasenleiter nicht verbunden ist. Es wird also stets das erste Schaltmittel zuerst oder nahezu zeitlich mit den weiteren Schaltmitteln verbunden und als letztes oder nahezu zeitlich mit den weiteren Schaltmitteln getrennt.

Hierzu stellt die Verriegelungsschaltung ausgangsseitig einen ersten Schaltbefehl für das erste Schaltmittel sowie wenigstens einen zweiten Schaltbefehl für das wenigstens eine weitere Schaltmittel bereit. Die Schaltbefehle sind so miteinander verknüpft, dass der wenigstens eine Phasenleiter mittels des wenigstens einen weiteren Schaltmittels nur dann in einen Verbindungsbetriebszustand verbringbar ist, wenn der Neutralleiter mittels des ersten Schaltmittels verbunden ist oder nahezu zeitlich verbunden wird. Zudem lässt sich der Neutralleiter mittels des ersten Schaltmittels nur dann in einen Trennbetriebszustand verbringen, wenn der wenigstens eine weitere Phasenleiter mittels des wenigstens einen weiteren Schaltmittels getrennt ist oder nahezu zeitlich mit dem Neutralleiter getrennt wird. Vorteilhaft stellt die Verriegelungsschaltung sicher, dass zu jedem Zeitpunkt, zu dem die Ladespannung am Anschlusselement bereitgestellt ist, der Neutralleiter der Anschlussverbindung verbunden ist. Dies ist wichtig für den sicheren Betrieb der AC-Versorgungsstation. Der Neutralleiter ist beim Laden mit weniger als drei Phasen immer stromführend. Beim zweiphasigen Laden handelt es sich um einen Ausgleichsstrom. Beim einphasigen Laden fließt der komplette Rückstrom über den Neutralleiter. Ebenso fließt ein Rückstrom über den Neutralleiter, wenn dreiphasig geladen wird und die Phasen nicht gleichmäßig beziehungsweise unsymmetrisch belastet sind.

Beispielsweise dienen ein Halbleiterschaltelement, ein Schütz mit entsprechenden Trennereigenschaften oder ein Relais als erstes und/oder weiteres Schaltmittel der AC-Versorgungsstation.

Nach einer bevorzugten Ausführungsform der Erfindung ist das erste Schaltmittel mehrpolig ausgebildet und dem Neutralleiter und einem der drei Phasenbeziehungsweise Außenleiter zugeordnet. Das wenigstens eine weitere Schaltmittel ist dann wenigstens einem weiteren, das heißt einem anderen Phasenleiter als dem einen der drei Phasenleiter zugeordnet, der mit dem Neutralleiter über das erste Schaltmittel geschaltet wird. Über das wenigstens eine weitere Schaltmittel lassen sich der Neutralleiter und der eine der drei Phasenleiter nicht schalten, das heißt nicht verbinden oder trennen.

Nach einer Weiterbildung der Erfindung sieht die Verriegelungsschaltung einen Signaleingang vor, an dem ein Schaltzustandssignal des ersten Schaltmittels anliegt. Vorteilhaft dient hier der tatsächliche Schaltzustand des ersten Schaltmittels als ein Freigabe- oder Verriegelungssignal für die Verriegelungsschaltung. Sofern das erste Schaltmittel beispielsweise als Schütz ausgebildet ist, kann das Schaltzustandssignal über den Hilfskontakt des Schützes bereitgestellt werden.

Nach einer Weiterbildung der Erfindung ist auch das weitere Schaltmittel als ein zweipoliges Schaltmittel ausgebildet. Die zwei Pole des weiteren Schaltmittels sind zwei Phasenleitern der Anschlussverbindung so zugeordnet, dass die zwei Phasenleiter stets gleichzeitig verbunden oder getrennt sind. Vorteilhaft gelingt es hierdurch, mit nur zwei Schaltmitteln einen wahlweise einphasigen oder dreiphasigen Betrieb der AC-Versorgungsstation zu ermöglichen. Die Schaltmittel können dabei baugleich ausgeführt werden. Hierdurch vereinfacht sich die Lagerhaltung und Logistik in Bezug auf die Schaltmittel. Zugleich ist Montagefehlern durch die Verwendung von Gleichteilen entgegengewirkt. Zudem werden die Kosten gesenkt und mögliche Verschleißteile eingespart.

Soweit das erste Schaltmittel und/oder das weitere Schaltmittel mehrpolig ausgebildet sind, können die Pole des jeweiligen Schaltmittels mechanisch gekoppelt sein und gemeinsam geschaltet werden.

Nach einer Weiterbildung der Erfindung ist das erste Schaltmittel allein dem Neutralleiter und keinem Phasenleiter zugeordnet. Es schaltet also einzig den Neutralleiter. Zudem sieht jeder der drei Phasenleiter ein weiteres Schaltmittel vor. Insgesamt sind demzufolge vier Schaltmittel vorgesehen, wobei die Verriegelungsschaltung sowohl bei einphasigen Laden als auch beim dreiphasigen Laden so eingerichtet ist, dass das erste Schaltmittel stets zuerst oder gleichzeitig verbunden und als letztes getrennt oder gleichzeitig getrennt wird.

Nach einer alternativen Ausführungsform der Erfindung kann ein zweipoliges erstes Schaltmittel mit zwei weiteren, jeweils einpolig ausgeführten Schaltmitteln kombiniert werden, über die die beiden weiteren Phasenleiter der Anschlussverbindung getrennt geschaltet werden können. Vorteilhaft kann hierdurch abhängig von den Betriebszuständen der insgesamt drei Schaltmittel die AC-Versorgungsstation wahlweise einphasig, zweiphasig oder dreiphasig betrieben werden.

Nach einer Weiterbildung der Erfindung ist die Verriegelungsschaltung als eine Hardwareschaltung ausgebildet. Vorteilhaft ist die Schaltung hierdurch sicher und schnell.

Nach einer Weiterbildung der Erfindung ist die Verriegelungsschaltung in der Befehlskette zwischen dem Steuergerät einerseits und dem ersten und wenigstens einen weiteren Schaltmittel andererseits angeordnet. Das Steuergerät stellt der Verriegelungsschaltung eingangsseitig einen dem ersten Schaltmittel zugeordneten ersten Steuerbefehl sowie einen dem zweiten Schaltmittel zugeordneten zweiten Steuerbefehl bereit. Aufgabe des Steuergeräts ist es unter anderem, den Ladevorgang zu starten und zu beenden und beispielsweise vorzugeben, ob der Ladevorgang einphasig oder mehrphasig durchgeführt wird. Das Steuergerät übernimmt also die funktionale Steuerung und Koordination des Ladevorgangs. Das Steuergerät kommuniziert hierzu beispielsweise mit dem elektrisch betreibbaren Fahrzeug, einem Netzbetreiber und/oder einer übergeordneten Betriebszentrale, welche den Ladevorgang der AC-Versorgungsstation administriert und betreut. Die Servicestation kann überdies den gleichzeitigen Betrieb mehrerer Versorgungsstationen koordinieren und Abrechnungsfunktionen gegenüber einem Kunden beziehungsweise Nutzer übernehmen. Der Verriegelungsschaltung obliegt es, die Betriebszustände der Schaltmittel zu überwachen und sicherzustellen, dass kein unerlaubter und sicherheitskritischer Betriebsfall auftritt, in dem eine Ladespannung bereitgestellt ist, ohne dass der Neutralleiter verbunden wäre.

Beispielsweise kann die Verriegelungsschaltung in das Steuergerät integriert sein.

Nach einer Weiterbildung der Erfindung ist ein Schaltzustandssignal des wenigstens einen weiteren Schaltmittels von ebendiesem zu der Verriegelungsschaltung und/oder dem Steuergerät geführt. Sofern das Schaltzustandssignal des wenigstens einen weiteren Schaltmittels zu dem Signaleingang der Verriegelungsschaltung geführt ist, wird es ebendort verarbeitet. Ist demgegenüber das Schaltzustandssignal des wenigstens einen weiteren Schaltmittels dem Steuergerät zugeführt, wird das Schaltzustandssignal des wenigstens einen weiteren Schaltmittels im Steuergerät verarbeitet. Das Steuergerät kennt und berücksichtigt den Betriebszustand des wenigstens einen weiteren Schaltmittels und definiert den ersten Steuerbefehl und/oder den zweiten Steuerbefehl unter Berücksichtigung des Betriebszustands des wenigstens einen weiteren Schaltmittels.

Nach einer Weiterbildung der Erfindung lässt sich das wenigstens eine weitere Schaltmittel nur dann in den Verbindungsbetriebszustand verbringen, wenn einerseits der erste Steuerbefehl des Steuergeräts das Verbinden des Neutralleiters vorsieht und andererseits der zweite Steuerbefehl des Steuergeräts das Verbinden des wenigstens einen der drei Phasenleiters befielt. Insgesamt müssen demzufolge drei Voraussetzungen erfüllt sein, um das wenigstens eine weitere Schaltmittel in den Verbindungsbetriebszustand zu verbringen: Neben den zwei "richtigen" Steuerbefehlen des Steuergeräts muss das zu dem Signaleingang der Verriegelungsschaltung geführte erste Schaltzustandssignal kenntlich machen, dass das erste Schaltmittel tatsächlich in seinem Verbindungsbetriebszustand vorgesehen ist, so dass das Verbringen des wenigstens einen weiteren Schaltmittels in den Verbindungsbetriebszustand nicht blockiert wird.

Nach einer Weiterbildung der Erfindung kann das erste Schaltmittel, welches dem Neutralleiter der Anschlussverbindung zugeordnet ist, nur dann in den Trennbetriebszustand verbracht werden, wenn der erste Steuerbefehl des Steuergeräts das Trennen des Neutralleiters vorsieht und der zweite Steuerbefehl des Steuergeräts das Trennen des wenigstens einen der drei Phasenleiters befielt. Auch hier sind demzufolge insgesamt drei Schaltvoraussetzungen zu erfüllen: Neben den zwei Steuerbefehlen des Steuergeräts muss das zu dem Signaleingang der Verriegelungsschaltung geführte Schaltzustandssignal des wenigstens einen weiteren Schaltmittels kenntlich machen, dass das wenigstens eine weitere Schaltmittel in seinem Trennbetriebszustand vorgesehen ist. Nur dann kann das erste Schaltmittel in seinen Trennbetriebszustand verbracht werden.

Nach einer Weiterbildung der Erfindung sieht die Verriegelungsschaltung wenigstens ein Verzögerungsglied vor, welches dazu eingerichtet ist, den wenigstens einen der drei Phasenleiter mittels des wenigstens einen weiteren Schaltmittels gegenüber dem Neutralleiter verzögert zu verbinden und/oder den Neutralleiter mittels des ersten Schaltmittels gegenüber dem wenigstens einen der drei Phasenleiter verzögert zu trennen.

Zur Lösung der Aufgabe weist die Erfindung die Merkmale des Patentanspruchs 9 auf. Demzufolge umfasst ein Betriebsverfahren für eine AC-Versorgungsstation, welche eine Anschlussverbindung mit einem Neutralleiter und drei Phasenleitern sowie ein erstes Schaltelement und wenigstens ein weiteres Schaltelement zum Ein- und Ausschalten einer Ladespannung vorsieht und bei dem mittels des ersten Schaltelements der Neutralleiter geschaltet wird und das wenigstens eine weitere Schaltmittel wenigstens einen der drei Phasenleiter wahlweise verbindet oder trennt, die folgenden Verfahrensschritte: Das Fahrzeug wird an eine Versorgungsstation angeschlossen, das erste Schaltmittel wird in einen Verbindungsbetriebszustand verbracht, in dem der Neutralleiter verbunden ist, und das wenigstens eine weitere Schaltmittel wird zeitgleich mit dem ersten Schaltmittel oder danach in einen Verbindungsbetriebszustand verbracht, in dem der wenigstens eine der drei Phasenleiter verbunden ist.

Der besondere Vorteil der Erfindung besteht darin, dass sichergestellt ist, dass die Phasenleiter nur nach oder zusammen mit dem Neutralleiter verbunden werden. Dies erlaubt einen sicheren Betrieb der AC-Versorgungsstation zu Beginn eines Ladevorgangs.

Nach einer bevorzugten Ausführungsform der Erfindung wird beim Beenden des Ladevorgangs der Neutralleiter zeitgleich mit den Phasenleiter und/oder danach getrennt. Vorteilhaft ist hierdurch stets ein sicherer Betrieb der AC-Versorgungsstation gewährleistet.

Nach einer Weiterbildung der Erfindung werden zum mehrphasigen Laden des elektrisch betreibbaren Fahrzeugs der Neutralleiter und wenigstens zwei der drei und bevorzugt alle drei Phasenleiter verbunden und eine an das Fahrzeug abgegebene Ladeleistung wird gedrosselt, indem alle oder wenigstens einzelne weitere Schaltmittel in einen Trennbetriebszustand verbracht und so zwei der drei Phasenleiter unterbrochen werden und das Fahrzeug dann einphasig weitergeladen wird.

Bevorzugt wird das erste Schaltmittel als zweipoliges Schaltmittel ausgebildet und dazu verwendet, den Neutralleiter und einen ersten Phasenleiter gemeinsam zu schalten. Zudem ist das weitere Schaltmittel als zweipoliges Schaltmittel ausgebildet. Es dient der gemeinsamen Verbindung von zwei weiteren Phasenleitern der Anschlussverbindung. Es ist insofern dazu eingerichtet, die zwei verbleibenden Phasenleiter der Anschlussverbindung, die nicht mit dem ersten Schaltmittel geschaltet werden, gleichzeitig zu verbinden beziehungsweise zu trennen. Das weitere Schaltmittel dient demzufolge letztlich dazu, das elektrisch betreibbare Fahrzeug wahlweise einphasig oder dreiphasig zu laden. Beim einphasigen Laden des elektrisch betreibbaren Fahrzeugs ist das weitere Schaltmittel in seinem Trennbetriebszustand vorgesehen und die weiteren Phasenleiter sind unterbrochen. Beim dreiphasigen Laden des elektrisch betreibbaren Fahrzeugs ist das weitere Schaltmittel in seinem Verbindungsbetriebszustand vorgesehen und der erste Phasenleiter sowie die zwei weiteren Phasenleiter sind verbunden.

Als elektrisch betreibbare Fahrzeuge im Sinne der Erfindung gelten insbesondere alle Automobile (Pkw, Lkw, Wohnmobile, Zweiräder, Busse, Transporter und andere), Schienenfahrzeuge (insbesondere Lokomotiven), Wasserfahrzeuge (Boote und Schiffe), Luftfahrzeuge sowie Anhänger (Wohnanhänger), mobile Verkaufsstände und andere. Die elektrische Energie kann für Fahrzeuge mit und ohne eigenen Energiespeicher zur Verfügung gestellt werden.

Eine AC-Versorgungsstation im Sinne der Erfindung dient der Bereitstellung elektrischer Energie für elektrisch betreibbare Fahrzeuge im öffentlichen oder privaten Bereich. Darüber hinaus kann vorgesehen sein, dass die AC-Versorgungsstation genutzt wird, um im Rahmen eines übergeordneten Energie- und/oder Lastmanagements Energie aus einem Energiespeicher des an die AC-Versorgungsstation angeschlossenen elektrisch betreibbaren Fahrzeugs in das Versorgungsnetz ein- beziehungsweise zurückzuspeisen. Auf diese Weise können Spitzenbedarfe abgedeckt und das Versorgungsnetz stabilisiert werden.

Aus den weiteren Unteransprüchen und der nachfolgenden Beschreibung sind weitere Vorteile, Merkmale und Einzelheiten der Erfindung zu entnehmen. Dort erwähnte Merkmale können jeweils einzeln für sich oder auch in beliebiger Kombination erfindungswesentlich sein. Erfindungsgemäß beschriebene Merkmale und Details der AC-Versorgungsstation gelten selbstverständlich auch im Zusammenhang mit dem erfindungsgemäßen Betriebsverfahren und umgekehrt. So kann auf die Offenbarung zu den einzelnen Erfindungsaspekten stets wechselseitig Bezug genommen werden. Die Zeichnungen dienen lediglich beispielhaft der Klarstellung der Erfindung. Sie haben keinen einschränkenden Charakter.

Es zeigen:
- Fig. 1: ein Schaltbild einer AC-Versorgungsstation in einer ersten Ausführungsform,
- Fig. 2: ein Schaltbild der AC-Versorgungsstation in einer zweiten Ausführungsform und
- Fig. 3: ein Schaltbild der AC-Versorgungsstation in einer dritten Ausführungsform.

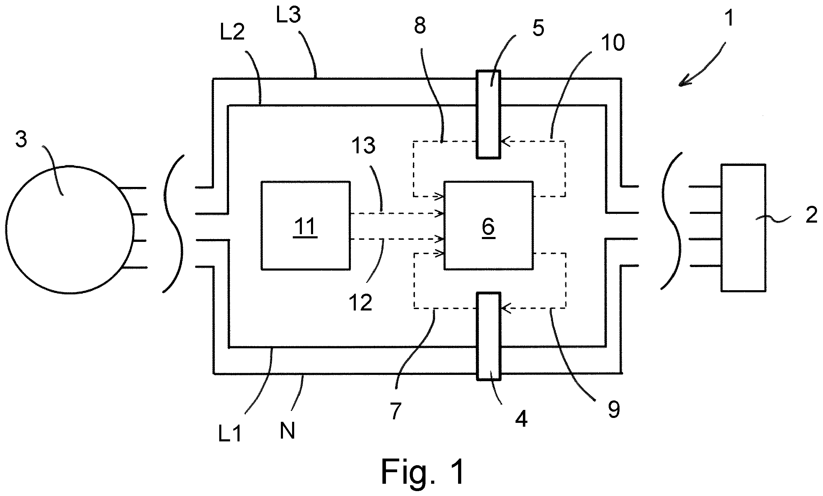

Eine erste Ausführungsform einer AC-Versorgungsstation für ein elektrisch betreibbares Fahrzeug ist in Fig. 1 dargestellt. Die Versorgungsstation sieht neben weiteren, nicht dargestellten Funktionskomponenten eine Anschlussverbindung 1 mit insgesamt drei Phasenleitern L1, L2, L3 und einem Neutralleiter N sowie eine Verriegelungsschaltung 6 und ein Steuergerät 11 vor. Nicht dargestellte Funktionskomponenten der Versorgungsstation sind beispielsweise ein Energiemengenzähler, Leitungssicherungen, Fehlerstromschutzschaltelemente und Kommunikationsmittel.

Die Anschlussverbindung 1 dient dazu, ein Anschlusselement 2 der AC-Versorgungsstation, beispielsweise ein Steckelement mit einem Versorgungsanschluss 3 zu verbinden. Über den Versorgungsanschluss 3 erfolgt die Bereitstellung der Energie. Die Energie kann beispielsweise einem lokalen oder externen Versorgungsnetz entnommen werden. Beispielsweise kann lokal erzeugte regenerative Energie, beispielsweise Sonnenenergie oder Windenergie, zum Laden des elektrisch betreibbaren Fahrzeugs verwendet werden.

Die 1 AC-Versorgungsstation sieht zwei Schaltmittel 4, 5 vor, welche dem Neutralleiter N und den Phasenleitern L1, L2, L3 der Anschlussverbindung zugeordnet sind. Ein erstes Schaltmittel 4, welches zweipolig ausgebildet ist, schaltet gleichzeitig beziehungsweise gemeinsam den Neutralleiter N und einen ersten Phasenleiter L1. Ein weiteres Schaltmittel 5, welches ebenfalls zweipolig ausgebildet ist, schaltet einen zweiten Phasenleiter L2 und einen dritten Phasenleiter L3 der Anschlussverbindung 1. Beispielsweise dienen ein Schütz oder ein Relais als erstes Schaltmittel 4 und/oder als weiteres Schaltmittel 5.

Durch das Vorsehen der zwei Schaltmittel 4, 5 kann das an das Anschlusselement 2 angeschlossene elektrisch betreibbare Fahrzeug wahlweise einphasig oder dreiphasig geladen werden. Beim einphasigen Laden ist lediglich der erste Phasenleiter L1 und über das erste Schaltmittel zusätzlich der Neutralleiter N verbunden. Demgegenüber sind beim einphasigen Laden der zweite Phasenleiter L2 und der dritte Phasenleiter L3 nicht verbunden. Das weitere Schaltmittel 5 befindet sich insofern in einem Trennbetriebszustand.

Beim dreiphasigen Laden sind die drei Phasenleiter L1, L2, L3 verbunden und das erste Schaltmittel 4 sowie das weitere Schaltmittel 5 sind in ihren Verbindungsbetriebszuständen vorgesehen. Über das erste Schaltmittel 4 ist wie beim einphasigen Laden der Neutralleiter N verbunden.

Beim dreiphasigen Laden wird dem elektrisch betreibbaren Fahrzeug eine hohe Ladeleistung bereitgestellt. Sofern die drei Phasenleiter L1, L2, L3 gleichmäßig beziehungsweise symmetrisch belastet sind, ist der Neutralleiter N unbelastet beziehungsweise rückstromfrei. Sofern die Belastung der einzelnen Phasen unsymmetrisch ist, dient der Neutralleiter N als Ausgleichsleiter und ein Ausgleichsstrom fließt über den Neutralleiter N.

In der einphasigen Konfiguration wird das elektrisch betreibbare Fahrzeug gedrosselt geladen. Die Ladeleistung ist typischerweise geringer als beim dreiphasigen Laden. Zudem fließt über den Neutralleiter N stets der Rückstrom. Der Neutralleiter N ist demzufolge beim einphasigen Laden nie stromfrei.

Der Anschlussverbindung 1 mit dem Neutralleiter N und den drei Phasenleitern L1, L2, L3 sind den Schaltmittel 4, 5, die Verriegelungsschaltung 6 sowie das Steuergerät 11 der AC-Versorgungsstation zugeordnet. Die Verriegelungsschaltung 6 ist als eine Hardwareschaltung ausgebildet. Sie empfängt eingangsseitig ein Schaltzustandssignal 7 des ersten Schaltmittels 4 sowie ein Schaltzustandssignal 8 des weiteren Schaltmittels 5. Die Schaltzustandssignale 7, 8 kennzeichnen dabei die Betriebszustände der Schaltmittel 4, 5. Jeweils wird anhand der Schaltzustandssignale 7, 8 identifiziert, ob die Schaltmittel 4, 5 sich in einem Verbindungsbetriebszustand oder ihrem Trennbetriebszustand befinden.

Die Verriegelungsschaltung 6 stellt ausgangsseitig Schaltbefehle 9, 10 bereit, die den Schaltmitteln 4, 5 zugeführt sind. Insofern dient ein erster Schaltbefehl 9 dazu, das erste Schaltmittel 4 von seinem Trennbetriebszustand in seinen Verbindungsbetriebszustand oder umgekehrt zu verbringen. In analoger Weise dient ein zweiter Schaltbefehl 10 dazu, das weitere Schaltmittel 5 von seinem Trennbetriebszustand in seinen Verbindungsbetriebszustand oder von seinem Verbindungsbetriebszustand in seinen Trennbetriebszustand zu verbringen.

Die Verriegelungsschaltung 6 ist überdies datentechnisch mit dem Steuergerät 11 verbunden. Vom Steuergerät 11 wird ein erster Steuerbefehl 12 sowie ein zweiter Steuerbefehl 13 der Verriegelungsschaltung 6 eingangsseitig bereitgestellt. Der erste Steuerbefehl 12 bezieht sich auf das erste Schaltmittel 4. In analoger Weise wird über den zweiten Steuerbefehl 13 der Betriebszustand des weiteren Schaltmittels 5 beeinflusst.

Die Steuerbefehle 12, 13, die das Steuergerät 11 bereitstellt, dienen insbesondere der übergeordneten Koordination des Ladevorgangs. Über sie wird beispielsweise der Ladevorgang gestartet beziehungsweise beendet, indem der Befehl gegeben wird, jedenfalls das erste Schaltmittel 4 und optional auch das weitere Schaltmittel 5 in den Verbindungsbetriebszustand zu verbringen. Hier ist, wie oben dargelegt, beim einphasigen Laden lediglich das erste Schaltmittel 4 verbunden, wohingegen beim dreiphasigen Laden beide Schaltmittel 4, 5 sich in dem Verbindungsbetriebszustand befinden.

Die Verriegelungsschaltung 6 folgt den Steuerbefehlen 12, 13, die von dem Steuergerät 11 bereitgestellt werden, jedoch nicht bedingungs- beziehungsweise vorbehaltslos. Das Schalten der Schaltmittel 4, 5 erfolgt stets nur unter der Maßgabe, dass das weitere Schaltmittel 5 nur in den Verbindungsbetriebszustand verbringbar ist, wenn das erste Schaltmittel 4 ebenfalls im Verbindungsbetriebszustand vorgesehen ist. Zudem kann das erste Schaltmittel 4 nur in den Trennbetriebszustand verbracht werden, wenn das weitere Schaltmittel 5 im Trennbetriebszustand vorgesehen ist. Sofern also beispielsweise das elektrisch betreibbare Fahrzeug, welches über das Anschlusselement 2 mit der AC-Versorgungsstation verbunden ist, dreiphasig geladen werden soll, muss das weitere Schaltmittel 5 in den Verbindungsbetriebszustand verbracht werden. Voraussetzung hierfür ist, dass die zwei Steuerbefehle 12, 13 des Steuergeräts 11 entsprechend konfiguriert sind und zusätzlich das Schaltzustandssignal 7 des ersten Schaltmittels 4 kenntlich macht, dass das erste Schaltmittel 4 in seinem Verbindungsbetriebszustand vorgesehen ist.

Sofern beispielsweise der Ladevorgang beendet werden soll, kann das erste Schaltmittel 4 nur dann in seinen Trennbetriebszustand verbracht werden, wenn die Steuerbefehle 12, 13 des Steuergeräts 11 entsprechend konfiguriert sind und zusätzlich das Schaltzustandssignal 8 des weiteren Schaltmittels 5 kenntlich macht, dass das weitere Schaltmittel 5 in seinem Trennbetriebszustand vorgesehen ist.

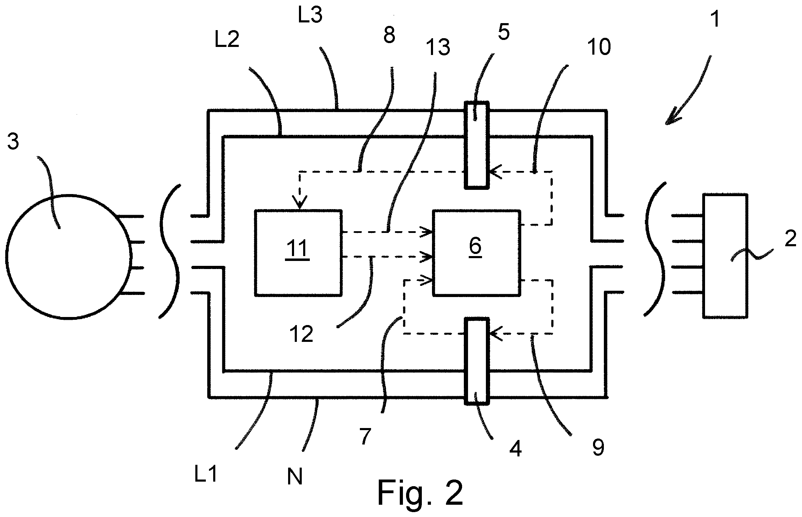

Fig. 2 zeigt eine zweite Ausführungsform der AC-Versorgungsstation. Die Konfiguration der AC-Versorgungsstation nach Fig. 2 entspricht weitestgehend der nach Fig. 1. Es ist hier jedoch so, dass das Schaltzustandssignal 8 des weiteren Schaltmittels 5 nicht der Verriegelungsschaltung 6, sondern dem Steuergerät 11 zugeführt ist. Das Steuergerät 11 kennt also den Betriebszustand des weitere Schaltmittels 5. Es wird demzufolge die Steuerbefehle 12, 13 für die Verriegelungsschaltung 6 stets so generieren, dass das weitere Schaltmittel 5 nur verbunden werden kann, wenn das erste Schaltmittel 4 sich in dem Verbindungsbetriebszustand befindet, und dass das erste Schaltmittel 4 nur geöffnet werden kann, wenn das weitere Schaltmittel 5 sich ebenfalls in dem Trennbetriebszustand befindet.

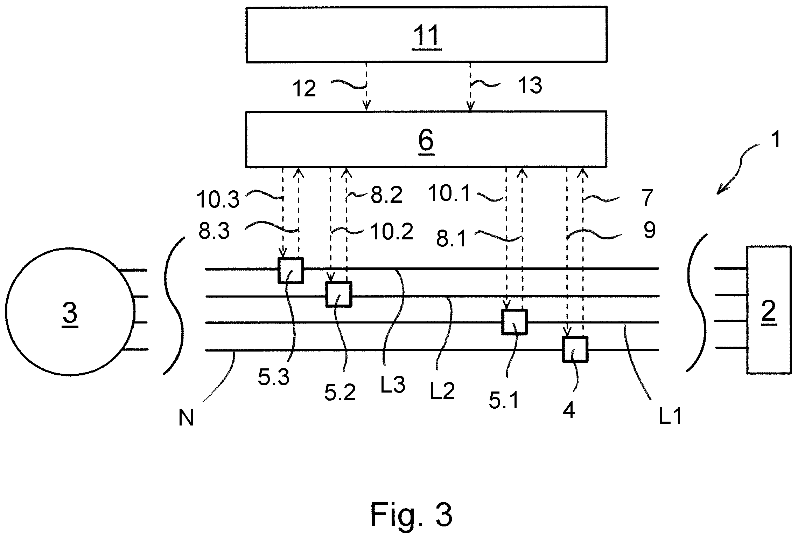

Eine dritte Ausführungsform der AC-Versorgungsstation ist in Fig. 3 dargestellt. Die AC-Versorgungsstation sieht eine Anschlussverbindung 1 vor, die wie gehabt den Neutralleiter N sowie die drei Phasenleiter L1, L2, L3 umfasst. Zudem ist ein einpoliges erstes Schaltmittel 4 zum Verbinden beziehungsweise Trennen des Neutralleiters N vorgesehen. Des Weiteren sind drei weitere Schaltmittel 5.1, 5.2, 5.3 vorgesehen, die den drei Phasenleitern L1, L2, L3 zugeordnet sind. Die drei weiteren Schaltmittel 5.1, 5.2, 5.3 sind jeweils einpolig ausgebildet und dienen dazu, je einen der drei Phasenleiter L1, L2, L3 zu verbinden beziehungsweise zu trennen.

Insgesamt sieht die AC-Versorgungsstation vier Schaltmittel 4, 5.1, 5.2, 5.3 vor. Die vier Schaltmittel 4, 5.1, 5.2, 5.3 können baugleich ausgeführt sein. Jeder Leiter N, L1, L2, L3 der Anschlussverbindung 1 kann mittels eines der vier Schaltmittel 4, 5.1, 5.2, 5.3 individuell verbunden beziehungsweise getrennt werden.

Die Verbindungsschaltung 6 interagiert in bekannter Weise mit dem ersten Schaltmittel 4 sowie den drei weiteren Schaltmitteln 5.1, 5.2, 5.3. Das erste Schaltmittel 4 empfängt den Schaltbefehl 9 von der Verriegelungsschaltung 6 und stellt dieser das Schaltzustandssignal 7 zur Verfügung. Die weiteren Schaltmittel 5.1, 5.2, 5.3 empfangen Schaltbefehle 10.1, 10.2, 10.3 von der Verriegelungsschaltung. Die Schaltbefehle 10.1, 10.2, 10.3 dienen dazu, die weiteren Schaltmittel 5.1, 5.2, 5.3 vom Verbindungsbetriebszustand in den Trennbetriebszustand und zurück zu verbringen.

Der Betriebszustand der jeweiligen weiteren Schaltmittel 5.1, 5.2, 5.3 wird der Verriegelungsschaltung 6 über Schaltzustandssignale 8.1, 8.2, 8.3 der weiteren Schaltmittel 5.1, 5.2, 5.3 zur Verfügung gestellt.

Die Verriegelungsschaltung 6 interagiert in bekannter Weise mit dem Steuergerät 11 der AC-Versorgungsstation und empfängt von diesem die Steuerbefehle 12, 13, die dem ersten Schaltmittel 4 einerseits und den drei weiteren Schaltmitteln 5.1, 5.2, 5.3 andererseits zugeordnet sind. Der erste Steuerbefehl 12 des Steuergeräts 11 ist dem ersten Schaltmittel 4 zugeordnet. Der zweite Steuerbefehl 13 ist den weiteren Schaltmitteln 5.1, 5.2, 5.3 zugeordnet. Er ist so ausgebildet, dass die weiteren Schaltmittel 5.1, 5.2, 5.3 einzeln oder gemeinsam adressiert werden.

Die Verriegelungsschaltung 6 ist bevorzugt als Hardware-basierte Schaltung ausgebildet. Ihr Betrieb ist demzufolge zugleich sicher und schnell. In bekannter Weise dient die Verriegelungsschaltung 6 dazu sicherzustellen, dass ein beliebiger der drei Phasenleiter L1, L2, L3 nur verbunden werden kann, wenn der Neutralleiter N ebenfalls verbunden ist oder zeitgleich verbunden wird. Ebenso kann der Neutralleiter N nur getrennt werden, wenn die Phasenleiter L1, L2, L3 getrennt sind oder gleichzeitig getrennt werden. Das erste Schaltmittel 4 wird dabei stets zuerst verbunden und als letztes getrennt. Alle oder einzelne weitere Schaltmittel 5.1, 5.2, 5.3 lassen sich nur verbinden, wenn das erste Schaltmittel 4 sich im Verbindungsbetriebszustand befindet oder zeitgleich mit den weiteren Schaltmitteln 5.1, 5.2, 5.3 in diese verbracht wird. Ein Trennen des Schaltmittels 4 ist nur möglich, wenn die weiteren Schaltmittel 5.1, 5.2, 5.3 sich im Trennbetriebszustand befinden oder gleichzeitig in diesen verbracht werden.

Gleiche Bauteile und Bauteilfunktionen sind durch gleiche Bezugszeichen gekennzeichnet.

## Patentansprüche

1. AC-Versorgungsstation für ein elektrisch betreibbares Fahrzeug umfassend eine Anschlussverbindung (1) mit einem Neutralleiter (N) und drei Phasenleitern (L1, L2, L3), wobei die Anschlussverbindung (1) ein mit dem elektrisch betreibbaren Fahrzeug verbindbares Anschlusselement (2) und einen Versorgungsanschluss (3) verbindet, umfassend ein der Anschlussverbindung (1) zugeordnetes, ansteuerbares erstes Schaltmittel (4) sowie wenigstens ein der Anschlussverbindung (1) zugeordnetes, ansteuerbares weiteres Schaltmittel (5, 5.1, 5.2, 5.3) zum Ein- und Ausschalten einer Ladespannung an dem Anschlusselement (2) und umfassend ein Steuergerät (11) zum Durchführen eines Ladevorgangs, **dadurch gekennzeichnet, dass** das erste Schaltmittel (4) dem Neutralleiter (N) und das wenigstens eine weitere Schaltmittel (5, 5.1, 5.2, 5.3) wenigstens einem der drei Phasenleiter (L1, L2, L3) zugeordnet ist und dass dem ersten Schaltmittel (4) und dem wenigstens einen weiteren Schaltmittel (5, 5.1, 5.2, 5.3) eine Verriegelungsschaltung (6) mit einem Signalausgang zugeordnet ist, wobei von der Verriegelungsschaltung (6) ausgangsseitig ein Schaltbefehl (9) für das erste Schaltmittel (4) sowie ein Schaltbefehl (10, 10.1, 10.2, 10.3) für das wenigstens eine weitere Schaltmittel (5, 5.1, 5.2, 5.3) bereitgestellt sind derart, dass der wenigstens eine der drei Phasenleiter (L1, L2, L3) mittels des wenigstens einen weiteren Schaltmittels (5, 5.1, 5.2, 5.3) nur verbindbar ist, wenn der Neutralleiter (N) mittels des ersten Schaltmittels (4) verbunden wird, und/oder dass der Neutralleiter (N) mittels des ersten Schaltmittels (4) nur trennbar ist, wenn der wenigstens eine der drei Phasenleiter (L1, L2, L3) mittels des wenigstens einen weiteren Schaltmittels (5, 5.1, 5.2, 5.3) getrennt wird.

2. AC-Versorgungsstation nach Anspruch 1, **dadurch gekennzeichnet, dass** das erste Schaltmittel (4) als ein zweipoliges erstes Schaltmittel (4) ausgebildet ist, wobei die zwei Pole des ersten Schaltmittels (4) dem Neutralleiter (N) und einem der drei Phasenleiter (L1) zugeordnet sind, und dass das erste Schaltmittel (4) eingerichtet ist, den Neutralleiter (N) und den einen der drei Phasenleiter (L1) gemeinsam zu verbinden oder zu trennen.

3. AC-Versorgungsstation nach Anspruch 1 oder 2, **dadurch gekennzeichnet, dass** das weitere Schaltmittel (5) als ein zweipoliges weiteres Schaltmittel (5) ausgebildet ist, wobei die zwei Pole des weiteren Schaltmittels (5) zwei der drei Phasenleitern (L2, L3) zugeordnet sind, und dass das weitere Schaltmittel (5) eingerichtet ist, die zwei der drei Phasenleiter (L2, L3) gemeinsam zu verbinden oder zu trennen.

4. AC-Versorgungsstation nach Anspruch 2 oder 3, **dadurch gekennzeichnet, dass** die zwei Pole des ersten Schaltmittels (4) und/oder die zwei Pole des weiteren Schaltmittels (5) mechanisch gekoppelt sind.

5. AC-Versorgungsstation nach einem der Ansprüche 1 bis 4, **dadurch gekennzeichnet, dass** wenigstens zwei und bevorzugt drei weitere Schaltmittel (5.1, 5.2, 5.3) vorgesehen sind, wobei die wenigstens zwei und bevorzugt drei weiteren Schaltmittel (5.1, 5.2, 5.3) jeweils einpolig ausgebildet sind und wenigstens zwei der drei und bevorzugt allen drei Phasenleitern (L1, L2, L3) zugeordnet sind derart, dass ein weiteres Schaltmittel (5.1, 5.2, 5.3) je Phasenleiter (L1, L2, L3) vorgesehen ist zum wahlweisen Verbinden oder Trennen derselben.

6. AC-Versorgungsstation nach einem der Ansprüche 1 bis 5, **dadurch gekennzeichnet, dass** die Verriegelungsschaltung (6) einen Signaleingang vorsieht, wobei an der Verriegelungsschaltung (6) eingangsseitig ein Schaltzustandssignal (7) des ersten Schaltmittels (4) anliegt, und/oder dass das Schaltzustandssignal (7) des ersten Schaltmittels (4) von ebendiesem zu dem Steuergerät (11) geführt ist und/oder dass die Verriegelungsschaltung (6) als eine Hardware basierte Schaltung ausgebildet ist.

7. AC-Versorgungsstation nach einem der Ansprüche 1 bis 6, **dadurch gekennzeichnet, dass** die Verriegelungsschaltung (6) zwischen dem Steuergerät (11) einerseits und dem ersten und dem wenigstens einem weiteren Schaltmittel (4, 5, 5.1, 5.2, 5.3) anderseits angeordnet ist und der Verriegelungsschaltung (6) eingangsseitig ein für das erste Schaltmittel (4) bestimmter erster Steuerbefehl (12) des Steuergeräts (11) sowie ein für das wenigstens ein weitere Schaltmittel (5, 5.1, 5.2, 5.3) bestimmter zweiter Steuerbefehl (13) des Steuergeräts (11) bereitgestellt sind.

8. AC-Versorgungsstation nach einem der Ansprüche 1 bis 7, **dadurch gekennzeichnet, dass** ein Schaltzustandssignal (8, 8.1, 8.2, 8.3) des wenigstens einen weiteren Schaltmittels (5) von ebendiesem zu der Verriegelungsschaltung (6) und/oder dem Steuergerät (11) geführt ist.

9. AC-Versorgungsstation nach Anspruch 7 oder 8, **dadurch gekennzeichnet, dass** der wenigstens eine weitere Phasenleiter (L2, L3) mittels des weiteren Schaltmittels (5) nur verbindbar ist, wenn einerseits der erste Steuerbefehl (12) des Steuergeräts (11) das Verbinden des Neutralleiters (N) vorsieht und andererseits der zweite Steuerbefehl (13) des Steuergeräts (11) das Verbinden des wenigstens einen weiteren Phasenleiters (L1, L2) vorsieht, und/oder dass der Neutralleiter (N) mittels des ersten Schaltmittels (4) nur trennbar ist, wenn einerseits der zweite Steuerbefehl (13) des Steuergeräts (11) das Trennen des wenigstens einen weiteren Phasenleiters (L2, L3) vorsieht und andererseits der erste Steuerbefehl (12) des Steuergeräts (11) das Trennen des Neutralleiters (N) vorsieht.

10. AC-Versorgungsstation nach einem der Ansprüche 1 bis 9, **dadurch gekennzeichnet, dass** die Verriegelungsschaltung (6) wenigstens ein Verzögerungsglied umfasst zum verzögerten Verbinden des wenigstens einen weiteren Phasenleiters (L2, L3) mittels des zweiten Schaltmittels (5) und/oder zum verzögerten Trennen des Neutralleiters (N) und des einen Phasenleiters (L1) mittels des ersten Schaltmittels (4).

11. AC-Versorgungsstation nach einem der Ansprüche 1 bis 10, **dadurch gekennzeichnet, dass** das erste Schaltmittel (4) und/oder das zweite Schaltmittel (5) als ein mechanisch wirkendes Schaltmittel (4, 5) und bevorzugt als ein Schütz und/oder als ein Relais ausgebildet sind.

12. Betriebsverfahren für eine AC-Versorgungsstation für ein elektrisch betreibbares Fahrzeug, insbesondere für eine AC-Versorgungsstation nach einem der Ansprüche 1 bis 11, wobei eine Anschlussverbindung (1) der Versorgungsstation einen Neutralleiter (N) und drei Phasenleiter (L1, L2, L3) sowie ein erstes Schaltelement (4) und wenigstens ein weiteres Schaltelement (5, 5.1, 5.2, 5.3) zum Ein- und Ausschalten einer Ladespannung vorsieht, wobei mittels des ersten Schaltelements (4) der Neutralleiter (N) geschaltet wird und wobei das wenigstens eine weitere Schaltmittel (5, 5.2, 5.2, 5.3) wenigstens einen der drei Phasenleiter (L1, L2, L3) wahlweise verbindet oder trennt, umfassend die folgenden Verfahrensschritte:
- das Fahrzeug wird an die Versorgungsstation angeschlossen,
- das erste Schaltmittel (4) wird in einen Verbindungsbetriebszustand verbracht, in dem der Neutralleiter (N) verbunden ist,
- und das wenigstens eine weitere Schaltmittel (5, 5.1, 5.2, 5.3) wird zeitgleich mit dem ersten Schaltmittel (4) oder danach in einen Verbindungsbetriebszustand verbracht, in dem der wenigstens eine der drei Phasenleiter (L1, L2, L3) verbunden ist.

13. Betriebsverfahren nach Anspruch 12, **dadurch gekennzeichnet, dass** beim Beenden des Ladevorgangs der Neutralleiter (N) zeitgleich mit den Phasenleitern (L1, L2, L3) und/oder danach getrennt wird.

14. Betriebsverfahren nach Anspruch 12 oder 13, **dadurch gekennzeichnet, dass** zum mehrphasigen Laden des elektrisch betreibbaren Fahrzeugs der Neutralleiter (N) und wenigstens zwei der drei und bevorzugt alle drei Phasenleiter (L1, L2, L3) verbunden werden und dass eine an das Fahrzeug abgegebene Ladeleistung gedrosselt wird, indem alle oder wenigstens einzelne weitere Schaltmittel (5, 5.2, 5.3) in einen Trennbetriebszustand verbracht und zwei der drei Phasenleiter (L2, L3) unterbrochen werden und das Fahrzeug dann einphasig weitergeladen wird.

15. Betriebsverfahren nach einem der Ansprüche 12 bis 14, **dadurch gekennzeichnet, dass** der Neutralleiter (N) und ein erster Phasenleiter (L1) mittels des ersten Schaltmittels (4) gemeinsam verbunden oder getrennt werden, wobei das erste Schaltmittel als ein zweipoliges erstes Schaltmittel ausgebildet ist.

16. Betriebsverfahren nach einem der Ansprüche 12 bis 15, **dadurch gekennzeichnet, dass** das weitere Schaltmittel (5) als zweipoliges Schaltmittel ausgebildet wird und dass das elektrisch betreibbare Fahrzeug dreiphasig geladen wird, wobei mittels des zweiten Schaltmittels (5) zwei der drei Phasenleiter (L2, L3) der Anschlussverbindung (1) gleichzeitig geschaltet werden.
